**Europäisches Patentamt**

**European Patent Office**

**Office européen des brevets**

(19)

(11) Veröffentlichungsnummer : **0 305 821 B1**

# (12) EUROPÄISCHE PATENTSCHRIFT

(45) Veröffentlichungstag der Patentschrift :
24.04.91 Patentblatt 91/17

(51) Int. Cl.$^5$ : **B65G 53/56**

(21) Anmeldenummer : **88113466.2**

(22) Anmeldetag : **19.08.88**

(54) Vorrichtung zum Verschliessen einer Rohrabzweigung.

(30) Priorität : **04.09.87 DE 3729684**
**15.01.88 DE 3800942**

(43) Veröffentlichungstag der Anmeldung :
**08.03.89 Patentblatt 89/10**

(45) Bekanntmachung des Hinweises auf die
Patenterteilung :
**24.04.91 Patentblatt 91/17**

(84) Benannte Vertragsstaaten :
**BE CH DE FR GB LI NL**

(56) Entgegenhaltungen :
**SOVIET INVENTIONS ILLUSTRATED, Sektion
P,Q, Woche 8522, 10, Juli 1985. Derwent Publications Ltd., London, Q35**

(73) Patentinhaber : **AVT ANLAGEN- UND
VERFAHRENSTECHNIK GMBH
Birkenweg 4
W-7987 Weingarten (DE)**

(72) Erfinder : **Krambrock, Wolfgang, Dipl.-Ing.
Aichenwiesen 18
W-7981 Vogt (DE)**

(74) Vertreter : **Patentanwälte Dipl.-Ing. E. Eisele
Dr.-Ing. H. Otten
Seestrasse 42
W-7980 Ravensburg (DE)**

EP 0 305 821 B1

## Beschreibung

Die Erfindung betrifft eine Vorrichtung zum Verschließen einer Rohrabzweigung, insbesondere zum Verschließen jeweils einer Öffnung eines Y-förmigen Verteilerstutzens nach dem Oberbegriff des Anspruchs 1.

Bei der Entnahme von Schüttgut aus Silos wird häufig die Forderung gestellt, das entnommene ·Schüttgut wechselweise zwei oder mehreren räumlich getrennten Stellen zuzuleiten. Umgekehrt ist es möglich, Schüttgut aus zwei oder mehreren verschiedenen Silos einer gemeinsamen Entnahmestelle zuzuleiten. Dabei besteht die Forderung, daß zu keinem Zeitpunkt Gas oder Feststoffe, in besonderen Fällen auch Flüssigkeit, von der momentan schüttgutführenden Leitung in die verschlossene Leitung gelangen kann, d.h. die Leitungsabschnitte müssen gegeneinander absolut dicht sein.

Das Verschließen der Y-förmig nach unten oder nach oben gerichteten Förderstutzen kann auf verschiedene Weise geschehen. In beiden Stutzen können beispielsweise Schieber, Klappen, eine gemeinsame Schwenkklappe, Kugelhähne, Drehküken o. dgl. eingebracht werden. Diese Vorrichtungen haben den Nachteil, daß sich oberhalb der Verschließeinrichtung tote Zonen bilden können, in denen sich unter Umständen Schüttgut ansammelt, wobei bei Öffnung der Verschlußeinrichtung dieses abgelagerte Medium wieder freigegeben wird. Weiterhin sind die Anschlußöffnungen nur schlecht abzudichten.

Aus dem deutschen Gebrauchsmuster DE-GM 1 977 787 oder der deutschen Patentschrift Nr. 277 519 sind Verteilervorrichtungen bekanntgeworden, bei welchen die Y-förmigen Verteilerstutzen mittels eines gemeinsamen, als Drehzylinder mit schrägem Zylinderschnitt ausgebildeten Drehkükens verschließbar sind, wobei die Mittelachse des Drehkükens mit der Rohrachse des Zulaufstutzens fluchtet. Mit den bekannten Einrichtungen ist zwar eine einfache Umschaltmöglichkeit der jeweils zu verbindenden Anschlußstutzen gegeben. Derartige Vorrichtungen sind jedoch bezüglich ihrer Abdichtung empfindlich in bezug auf Schüttgüter, da die Abdichtungsflächen unmittelbar im Schüttgutstrom zu liegen kommen. Sofern man den Zufuhrstutzen mit gleichem Durchfluß-Innendurchmesser versehen will, wie die beiden Anschlußstutzen, ergeben sich auch hier Probleme mit der Abstimmung des Drehkükens, da die Anschlußöffnungen der Anschlußstutzen nicht vollständig von der Mantelfläche des Drehkükens verschlossen werden können. Demzufolge sind die Anschlußstutzen bei den bekannten Vorrichtungen stets mit kleinerem Innendurchmesser ausgeführt. Eine alternative Lösung hierzu ist in der DE-PS 277 519 dargestellt. Hier ist die Verschlußeinrichtung nicht als einfaches Drehküken mit schrägem Zylinderschnitt, sondern wesentlich komplizierter ausgebildet.

Der Erfindung liegt die Aufgabe zugrunde, einen möglichst einfachen Verteilerstutzen entsprechend der gattungsgemäßen Art vorzuschlagen, der gas- und wasserdicht den Zulauf von dem nicht belegten Ablauf bei geringstem Steueraufwand und geringen Betätigungskräften verschließt. Dabei sollen die Anschlußstutzen in ihrem Durchmesser gleich groß ausgebildet sein wie der Durchmesser des Zulaufstutzens.

Diese Aufgabe wird ausgehend von einer Vorrichtung der einleitend bezeichnenden Art erfindungsgemäß durch die kennzeichnenden Merkmale des Anspruchs 1 gelöst.

Durch die in den Unteransprüchen aufgeführten Maßnahmen sind vorteilhafte und zweckmäßige Weiterbildungen der erfindungsgemäßen Vorrichtung möglich.

Mit der erfindungsgemäßen Vorrichtung wird die aus dem deutschen Gebrauchsmuster GM 1 977 787 bekannte Vorrichtung derart verbessert, daß die erfindungsgemäße Aufgabe hervorragend gelöst werden kann. Der in der Grundkonzeption sehr einfache Aufbau der erfindungsgemäßen Vorrichtung ermöglicht einen unempfindlichen Betrieb ohne Störungen. Dabei muß eine hohe mechanische Zuverlässigkeit dafür sorgen, daß die Abdichtung eines Auslauf- oder Zulaufstutzens unter allen Umständen gewährleistet ist.

Um eine völlig sichere Abdichtung zu gewährleisten, wird die in einer Nut umlaufende Dichtung als aufblasbare Dichtung ausgeführt, wobei eine intermittierende Druckbeaufschlagung vorgesehen ist. Derartige aufblasbare Dichtungen werden als Meterware mit relativ großen Toleranzen geliefert. Weiterhin werden die Y-förmigen Verteilergehäuse, insbesondere bei größeren Abmessungen, als Gußwerkstücke hergestellt, die dann einer Bearbeitung unterzogen werden müssen. Um unabhängig von herstellungsbedingten Toleranzen arbeiten zu können, kann die erfindungsgemäße aufblasbare Dichtung zum Ausgleich nahezu jeglicher Toleranzen verwendet werden. Diese zwischen dem Drehküken und dem Verteilergehäuse vorhandenen Toleranzen werden dann mittels der aufblasbaren Dichtung überbrückt. Dabei dient eine einfache Steuerung der Druckbeaufschlagung und Druckentlastung zur problemlosen Bedienung der Vorrichtung.

Gemäß Anspruch 2 ist vorgesehen, daß ein mechanisches Schaltelement die jeweilige Endstellung des Drehkükens erkennt und hierdurch die Druckluft in der Dichtung gesteuert wird. Dies hat zur Folge, daß der Schwenkvorgang des Drehkükens von einer Anschlußöffnung zur nächsten Anschlußöffnung stets mit druckloser Dichtung und damit sehr leicht und ohne Reibung verschleißfrei vollzogen werden kann.

Gemäß der Weiterbildung der Erfindung nach Anspruch 3 ist das Schaltelement mit einem Stößel bzw. gegen Verdrehen gesicherten Rollenstößel ausgebildet, der jeweils in Positionsbohrungen in der Endlage des Drehkükens einrastet und eine anschließende Druckbeaufschlagung der Dichtung ermöglicht. Hierzu ist vorzugsweise ein Dreiwegeventil vorgesehen.

In Weiterbildung der Erfindung nach Anspruch 4 und 5 weist die aufblasbare Dichtung einen rechteckförmigen Querschnitt auf, der vorzugsweise V-förmige Einschnitte entlang seiner Nutflanken aufweist. Diese aufblasbare Dichtung wird in eine entsprechende, im Querschnitt ebenfalls rechteckförmige Nut im Drehküken eingelassen.

Die parallel zur ellipsenförmigen Schnittebene angeordnete elastische Dichtung ist durch ihre längliche Formgebung zuverlässig in das Drehküken eingelassen, so daß diese auch beim Überstreifen der Anschlußöffnungen nicht herausspringen kann.

Normalerweise ist der Innendurchmesser des Zulaufstutzens größer ausgeführt, als der Innendurchmesser der beiden Anschlußstutzen. Führt man die Innendurchmesser der Anschlußstutzen gleich groß aus wie den Durchmesser des Zulaufstutzens, so treffen sich die beiden Schnittlinien für die Anschlußöffnungen der Anschlußstutzen auf der Symmetrieebene des Zulaufstutzens. In diesem Bereich wäre deshalb für die Dichtung auf dem Drehküken keine Auflagefläche mehr vorhanden. Deshalb wird bei Anschlußstutzen mit gleich großem oder nahezu gleich großem Innendurchmesser wie der Durchmesser des Zulaufstutzens gemäß Anspruch 6 eine seitliche Materialauffütterung der Zulauföffnungen der Anschlußstutzen bereits beim Gießvorgang des Verteilergehäuses durchgeführt. Hierdurch ergibt sich eine Auflagefläche für die rundum laufende Dichtung des Drehkükens, wobei vorzugsweise nur dieser Auflagebereich für die Dichtung im gegossenen Verteilergehäuse einer genaueren spanabhebenden Bearbeitung unterzogen werden braucht.

Weitere Merkmale und Vorteile sind in der nachfolgenden Beschreibung anhand des in den Figuren dargestellten Ausführungsbeispiels beschrieben. Es zeigen

Fig. 1 einen Längsschnitt durch die erfindungsgemäße Einrichtung und

Fig. 2 eine vergrößerte Darstellung der Dichtung mit Steuereinheit in Fig. 1.

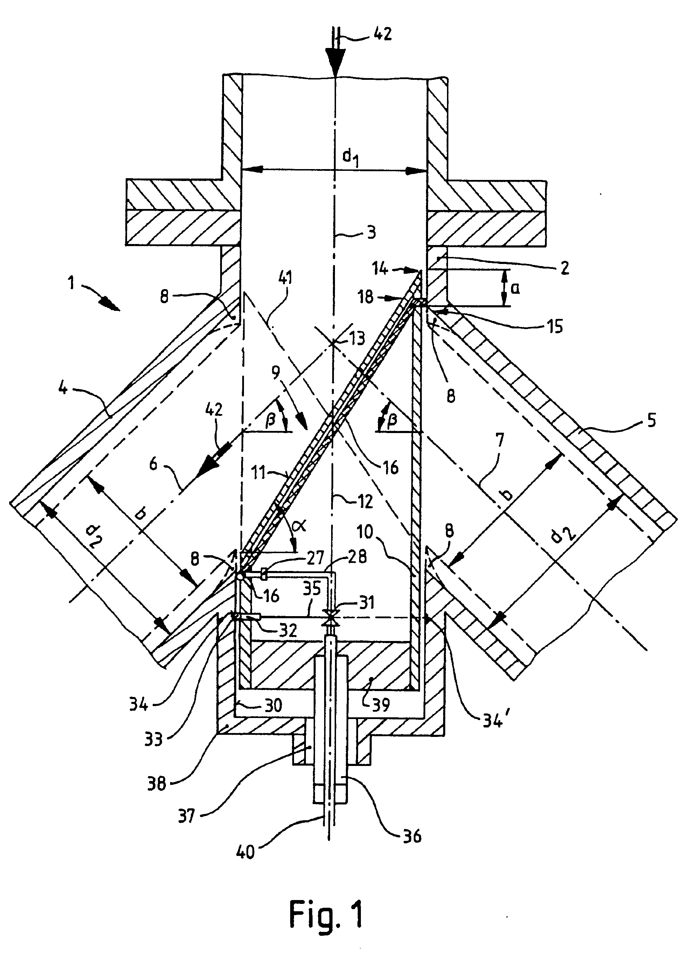

Der in der Fig. 1 dargestellte Verteilerstutzen (1) ist als Y-förmiger Verteilerstutzen ausgebildet und entspricht in seinem grundsätzlichen Aufbau der Vorrichtung gemäß DE-GM 1 977 787. Der Verteilerstutzen (1) weist einen oberen Zulaufstutzen (2) mit vertikaler Rohrachse (3) und zwei winklig hierzu abzweigende Anschlußstutzen (4, 5) mit zur vertikalen Rohrachse (3) spitzwinklig verlaufenden Rohrachsen (6, 7) auf.

Der Durchmesser des den Zulauf bildenden Verteilerstutzens (2) ist mit $d_1$, die Durchmesser der Anschlußstutzen (4, 5) mit $d_2$ bezeichnet. Da sich die Schnittlinien der Aussparungsöffnungen für die Anschlußstutzen (4, 5) in den Zulaufstutzen (2) nicht in der durch die vertikale Rohrachse (3) verlaufenden vertikalen Symmetrieebene schneiden dürfen, muß der Innendurchmesser $d_1$ des Zulaufstutzens (2) etwas größer sein als der Öffnungsquerschnitt der Anschlußstutzen (4, 5) zum Zulaufstutzen (2).

Um den Innendurchmesser $d_2$ der Anschlußstutzen (4, 5) gleich groß zu machen wie den Innendurchmesser $d_1$ des Zulaufstutzens (2), ist der jeweilige Anschlußstutzen (4, 5) in seinem Öffnungsbereich zum Zulaufstutzen (2) des Verteilergehäuses (1) mit einer seitlichen Materialauffütterung (8) bereits beim Gießvorgang versehen, so daß sich in diesem Bereich nur eine effektive Innenbreite von $b < d_1$ ergibt. In der Fig. 1 ist die Materialauffütterung (8) jeweils um 90° versetzt strichpunktiert angedeutet.

Die erfindungsgemäße Vorrichtung weist ein Drehküken (9) auf, das die Form eines Drehzylinders mit Zylinderwand (10) und schrägem Zylinderschnitt (11) bzw. Zylinderschnittfläche (11) aufweist. Die Zylinderschnittfläche (11) stellt eine im Rohrzylinder des Zulaufstutzens (2) unter einem Winkel $\alpha$ schräg gestellte, ellipsenförmige Abschlußfläche des Drehkükens (9) dar. Die Mittelachse (12) des Drehkükens (9) fluchtet mit der Rohrachse (3) des Zulaufstutzens (2).

Bei symmetrischer Anordnung der beiden Anschlußstutzen (4, 5), d.h. bei sich kreuzendem Schnittpunkt (13) der Rohrachsen (6, 7) mit den Rohrachsen (3, 12), muß der Neigungswinkel $\alpha$ der Zylinderschnittfläche bzw. Abschlußfläche (11) des Drehkükens (9) größer sein als der Winkel $\beta$ der Rohrachsen der Anschlußstutzen (4, 5) zur Horizontalen. Hierdurch liegt der oberste Punkt (14) der Abschlußfläche des Drehkükens (9) um den Betrag "a" oberhalb des obersten Punktes (15) der Anschlußöffnung des zu verschließenden Anschlußstutzens (4, 5).

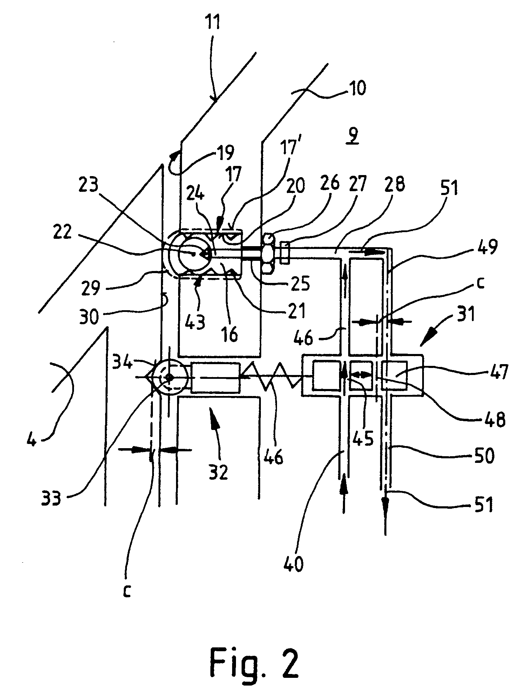

Die Abdichtung zwischen dem Drehküken (9) und dem zylindrischen Gehäuse des Verteilerstutzens (1) geschieht mittels der elliptisch umlaufenden Dichtung (16), die knapp unterhalb der Zylinderschnittfläche (11) des Drehkükens (9) und parallel zu dieser verläuft. Wie in Fig. 1 sowie in Fig. 2 näher dargestellt, ist die umlaufende Dichtung (16) in einer in die Mantelfläche (10) des Drehkükens (9) eingelassene Nut (17) kraftschlüssig und/oder formschlüssig eingelassen. Der oberste Punkt (18) (Fig. 1) der Dichtung (16) muß höher liegen als der oberste Punkt (15) der Einlaßöffnung des zu verschließenden Anschlußstutzens (5). Durch die im seitlichen Bereich der Eintrittsöffnungen zu den Anschlußstutzen (4, 5) vorhandenen Materialauffütterung (8), die um 90° versetzt gegenüber der in Fig. 1 dargestellten Weise verläuft, verläuft die Dichtung (16) in diesem Bereich entlang dieser Fläche. Bei der Herstellung des Verteilerstutzens (1) genügt die Bearbeitung der wirksamen Auflagefläche für die Dichtung (16).

Bei dem in Fig. 1 dargestellten Ausführungsbeispiel wird demnach der Anschlußstutzen (5) von der seitlichen Zylindermantelfläche (10) des Drehkükens (9) verschlossen, während die Öffnung des Anschlußstutzens (4) durch die elliptische Abschlußfläche (11) vollständig geöffnet ist.

Die in den Figuren 1 und 2 dargestellte, umlaufende Gummidichtung (16) hat zum Beispiel einen rechteckförmigen Querschnitt und ist in die Nut (17) mit ebenfalls rechteckförmigen Querschnitt eingelassen. Die seitlichen Flanken (43) der Dichtungsnut (17) stehen an jeder beliebigen Stelle des Drehkükenumfangs senkrecht zur äußeren Mantelfläche (19). Ggf. kann sich die Nut (17) durch einen trapezförmigen Querschnitt (17') nach innen hin konisch erweitern.

Die Außenflanken (20) der Dichtung (16) und/oder die Nutflanken (43) können Erhöhungen oder Vertiefungen (21) aufweisen. Vorzugsweise sind die Nutflanken (20) mit V-förmigen Einschnitten (21) zur formschlüssigen Haltung der Dichtung (16) versehen. Die Dichtung (16) wird in die Nut (17) ggf. eingeklebt, um ein ungewolltes Herausziehen der Dichtung zu verhindern.

Erfindungsgemäß ist die Dichtung (16) als aufblasbare elastische Dichtung mit einem Innenhohlraum (22) versehen. Ein Druckzuführungsnippel (24) wird vor dem Einbau der Dichtung (16) in die Dichtungsnut (17) von der Rückseite der Dichtung her durch diese bis in den Hohlraum (22) hineingestoßen. Der Nippel weist hierfür eine V-förmige Spitze (23) auf, deren breite Rückseite sich nach dem Durchstoßen in den Hohlraum (22) an die Hohlraumwandung anlegt. Die Dichtung (16) wird dann mit dem Metallnippel (24) durch die Bohrung (25) der Wandung (10) hindurchgeschoben und mittels einer Kontermutter (26) befestigt. Der Metallnippel (24) besitzt an seinem Ende ein Anschlußflansch (27) für eine Luftleitung (28), um Druckluft in den Innenraum (22) der elastischen Dichtung (16) einzuführen. Durch Druckbeaufschlagung der elastischen Dichtung (16) wölbt sich die vordere Fläche (29) gegen die Innenwandung (30) des Verteilerstutzens und dichtet den elliptisch umlaufenden Bereich und damit den jeweils zu verschließenden Anschlußstutzen (4, 5) ab.

Die Druckbeaufschlagung der Dichtung (16) erfolgt über ein steuerbares Dreiwegeventil (31) innerhalb des Drehkükens (9). Hierfür ist ein Schaltelement (32) mit einem mechanischen Stößel bzw. ein gegen Verdrehen gesicherter Rollenstößel (33) vorgesehen, welcher in eine Ausnehmung (34) in der Innenwandung (30) des Verteilerstutzens (1) eingreift. Das Schaltelement (32) mit Stößel (33) sowie die zugehörige Ausnehmung (34) ist derart am Drehküken (9) bzw. im Verteilerstutzen (1) angebracht, daß sich der Stößel (33) in die Ausnehmung (34) in der jeweiligen Endstellung des Drehkükens (9), d.h. in der jeweiligen Betriebsstellung befindet. In Fig. 1 ist deshalb auf der gegenüberliegenden Seite eine weitere Ausnehmung (34') vorgesehen, in die der Stößel (33) beim Verschließen des Anschlußstutzens (4) einrastet.

Sobald der Stößel (33) in die Ausnehmung (34) der Innenwandung (30) eingerastet ist, wird das Dreiwegeventil (31) im Sinne einer Druckzuführung über die Leitungen (40, 45, 46, 28) zur Dichtung (16) beaufschlagt, d.h. die elastische Dichtung (16) wird aufgeblasen, so daß eine zuverlässige Abdichtung der jeweilig zu verschließenden Öffnung des Anschlußstutzens (4, 5) erfolgt (siehe Fig. 2).

Will man das Drehküken (9) in die andere Position, d.h. in Fig. 1 in die Position der Abdichtung des Anschlußstutzens (4) bringen, so muß das Drehküken mittels der elektrisch oder mechanisch antreibbaren Drehspindel (36), die durch eine Büchse (37) durch das untere Gehäuseteil (38) des Verteilerstutzens (1) geführt ist, gedreht werden. Dabei ist die Drehspindel (36) in einem unteren Flansch (39) des Drehkükens (9) befestigt. Die Drehspindel (36) kann zum Beispiel auch gleichzeitig als Durchführung für die Druckluftzuleitung (40) zum Dreiwegeventil (31) dienen.

Dreht man nun die Drehspindel (36) aus der in Fig. 1 dargestellten einen Endlage heraus, so muß gegen den Widerstand des federunterstützten (Feder 46) Stößels (33) in der Ausnehmung (34) und gegen den Widerstand der aufgeblasenen elastischen Dichtung (16) das Drehküken (9) um einen geringen Betrag gedreht werden. Hierdurch wird der Stößel (33) durch das Herausgleiten aus der Ausnehmung (34) radial um den Betrag "c" nach innen gedrückt, was zur Betätigung des Stößels (33) und damit zur Betätigung des Dreiwegeventils (31) im Sinne einer Druckentlastung der Dichtung (16) führt. Dabei verschließt der Steuerschieber (47) die Öffnung (45) und öffnet die weitere Druckentlastungsöffnung (48), so daß die Luft aus dem Ventil (16) über die Leitungen (28, 49, 48, 50) (Pfeil 51) ins Freie entweichen kann. Danach kann das Drehküken (9) ohne eine Druckbeaufschlagung der Dichtung (16) mühelos reibungs- und verschleißfrei im Verteilerstutzen (1) bis zur gewünschten Endlage zur Verschließung eines weiteren Anschlußstutzens gedreht werden. Dies ist in Fig. 1 der Anschlußstutzen (4). Durch das Verschließen des gegenüberliegenden Anschlußstutzens (4) rastet der mechanische Stößel (33) in die gegenüberliegende Ausnehmung (34') in der Innenwandung (30) ein. Hierdurch läuft der mechanische Stößel (33) und der Steuerschieber (47) radial um den Betrag "c" nach außen und öffnet das Ventil (31) über die Leitungen (40, 45, 46, 28) im Sinne einer Druckbeaufschlagung der Dichtung (16). Die Steuerung der Druckbeaufschlagung erfolgt damit vollständig selbsttätig, ohne daß ein zusätzliches elektrisches Signal zur Steuerung der Druckluft für die Dichtung notwendig wäre.

Die gegenüberliegende Stellung des Drehkükens (9) ist mit Bezugszeichen (41) angedeutet. Der Weg des strömenden Mediums zeigen die Pfeile (42).

Die Erfindung ist nicht auf das beschriebene und dargestellte Ausführungsbeispiel beschränkt. Sie umfaßt auch vielmehr alle fachmännischen Weiterbildungen und Ausgestaltungen ohne eigenen erfinderischen Gehalt.

## Ansprüche

1. Vorrichtung zum Verschließen einer Rohrabzweigung, insbesondere zum Verschließen jeweils einer Öffnung eines Y-förmigen Verteilerstutzens, mit einem oberen Zulaufstutzen mit vertikaler Rohrachse und wenigstens zwei hierzu winklig abzweigenden Anschlußstutzen mit zur vertikalen Rohrachse des Zulaufstutzens spitzwinklig verlaufenden Rohrachsen, wobei jeweils ein abzweigender Anschlußstutzen mittels eines gemeinsamen, als Drehzylinder mit schrägem Zylinderschnitt ausgebildeten Drehkükens verschließbar ist, dessen Mittelachse mit der Rohrachse des Zulaufstutzens fluchtet, dadurch gekennzeichnet, daß zur Abdichtung des Drehkükens (9) gegenüber der Eintrittsöffnung des zu verschließenden Anschlußstutzens (4, 5) zum Verteilerstutzen (2) eine in etwa parallel zur elliptischen Zylinderschnittfläche (11) des Drehkükens (9) elliptisch umlaufende, aufblasbare Dichtung (16) in einer in der Drehkükenmantelfläche (10) eingebrachten, umlaufenden Nut (17) vorgesehen ist, und daß die Druckbeaufschlagung oder -entlastung der Dichtung (16) in der stationären Endlage über eine Ventilsteuerung (31) mit Steuereinheit (32) erfolgt.

2. Vorrichtung nach Anspruch 1, dadurch gekennzeichnet, daß die jeweilige Endstellung des Drehkükens (9) mittels einer als mechanisches Schaltelement (32) ausgebildeten Steuereinheit erfaßbar und die Druckluftregelung in der Dichtung (16) mittels eines Dreiwegeventils (31) steuerbar ist.

3. Vorrichtung nach Anspruch 2, dadurch gekennzeichnet, daß die Steuereinheit (32) einen Stößel bzw. einen gegen Verdrehen gesicherten Rollenstößel (33) aufweist, der, von der Mantelfläche (19) des Drehkükens (9) ausgehend, in Positionsbohrungen (34, 34') im Verteilergehäuse (1) einrastbar ist, wobei die elastische Dichtung (16) bei eingerastetem Stößel (33) mit Druckluft beaufschlagbar ist.

4. Vorrichtung nach Anspruch 1, 2 oder 3, dadurch gekennzeichnet, daß die aufblasbare Dichtung in ihrem Querschnitt trapez- oder rechteckförmig ausgebildet ist, wobei die Flanken (18) der Dichtungsnut (17) an jeder Stelle des Drehkükenumfangs senkrecht oder hinterschnitten zur Mantelfläche (19) des Drehkükens (9) stehen.

5. Vorrichtung nach Anspruch 4, dadurch gekennzeichnet, daß die Nutflanken (18) und/oder die Außenflanken (20) der elastischen Dichtung (16) vorzugsweise linienförmige Erhöhungen oder Vertiefungen und insbesondere V-förmige Einschnitte aufweisen.

6. Vorrichtung nach einem oder mehreren der vorhergehenden Ansprüche, dadurch gekennzeichnet, daß die Anschlußstutzen (4, 5) einen gleich großen Innendurchmesser $d_2$ aufweisen, wie der Innendurchmesser $d_1$ des Zulaufstutzens (2), wobei der Rohrübergangsbereich der Anschlußstutzen (4, 5) zum Zulaufstutzen (2) eine seitliche Materialauffütterung (8) zur Querschnittsverengung der Anschlußstutzen (4, 5) auf eine kleinere Durchlaßbreite "b" aufweist.

## Claims

1. A device for occluding a pipe branch, particularly for occluding in each case one aperture of a Y-shaped distributor connector, with an upper feed connector with a vertical pipe axis and, branching off at an angle thereto, at least two connection unions having pipe axes extending at an acute angle to the vertical axis of the feed connector, one branching-off union being adapted to be closed by means of a common rotary plug constructed as a rotating cylinder with an oblique cylinder section and of which the central axis is aligned with the pipe axis of the feed connector, characterised in that in order to seal the rotary plug (9) in respect of the inlet aperture of the union (5, 6) which has to be occluded, and which extends to the distributor connector (2), an inflatable seal (16) is provided in an encircling groove (17) incorporated into the outer surface (10) of the rotary plug and elliptically encircles the surface, substantially parallel with the elliptical cylinder section surface (11) of the rotary plug (9), and in that the application of pressure to or relief of pressure on the seal (16) occurs in the extreme stationary position via a valve control arrangement (31) with a control unit (32).

2. A device according to claim 1, characterised in that the particular extreme position of the rotary plug (9) can be ascertained by a control unit which is constructed as a mechanical switching element (32), the control of compressed air in the seal (16) being capable of being controlled by a three-way valve (31).

3. A device according to claim 2, characterised in that the control unit (32) has a push rod or a roller push rod (33) which is secured against rotation and which, starting from the outer surface (19) of the rotary plug (9), can be engaged in positioning bores (34, 34') in the distributor housing (1), the flexible seal (16) being capable of having compressed air applied to it when the push rod (33) is engaged.

4. A device according to claim 1, 2 or 3, characterised in that the inflatable seal is constructed so that it has a trapezoidal or rectangular cross-section, the flanks (18) of the sealing groove (17) being over the entire periphery of the rotary plug disposed at a right-angle to or undercut in relation to the outer surface (19) of the rotary plug (9).

5. A device according to claim 4, characterised in that the groove flanks (18) and/or the outer flanks (20) of the elastic seal (16) preferably have linear raised portions or depressions and in particular V-shaped slots.

6. A device according to one or more of the preceding claims, characterised in that the unions (4, 5) are of the same inside diameter $d_2$ as the inside diameter $d_1$ of the feed connector (2), the pipe transition zone of the unions (4, 5) to the feed connector (2) having a lateral build-up (8) of material to narrow the cross-section of the unions (4, 5) to a smaller passage width "b".

## Revendications

1. Dispositif pour obturer un embranchement de tube, en particulier pour obturer, à chaque fois, une ouverture d'un tube distributeur en forme de Y, comportant un tube supérieur d'arrivée à axe vertical et au moins deux raccords, qui en bifurquent angulairement, à axes s'étendant sous un angle aigu par rapport à l'axe vertical du tube d'arrivée, un raccord bifurquant étant, à chaque fois, obturable au moyen d'un boisseau ou noix de robinet rotatif, réalisé sous forme de cylindre rotatif à section oblique, dont l'axe central est aligné avec l'axe du tube d'arrivée, caractérisé en ce que, pour étanchéifier le boisseau rotatif (9) vis-à-vis de l'ouverture d'entrée du raccord (4, 5) à obturer par rapport au tube d'arrivée (2), est prévu, dans une gorge périphérique (17), ménagée dans la surface d'enveloppe (10) du boisseau rotatif, un joint étanche gonflable (16), agencé de façon elliptique en étant sensiblement parallèle à la surface (11) de la section elliptique du boisseau rotatif (9), et en ce que la charge ou la décharge de pression du joint étanche (16) a lieu, dans la position d'extrémité fixe, par l'intermédiaire d'une soupape (31) à commande (32).

2. Dispositif selon la revendication 1, caractérisé en ce que la position d'extrémité respective du boisseau rotatif (9) peut être détectée au moyen d'une commande réalisée sous forme d'un élément de commutation mécanique (32), et la régulation de la pression d'air dans le joint étanche (16) peut être commandée au moyen d'une soupape à trois voies (31).

3. Dispositif selon la revendication 2, caractérisé en ce que la commande (32) présente un poussoir ou un poussoir à galet (33) garanti contre la torsion, qui, à partir de la surface d'enveloppe (19) du boisseau rotatif (9), peut être engagé dans des perçages de positionnement (34, 34') dans le tube distributeur (1), le joint étanche élastique (16) pouvant être chargé d'air sous pression quand le poussoir (33) est engagé.

4. Dispositif selon la revendication 1, 2 ou 3, caractérisé en ce que le joint étanche gonflable présente une section transversale trapézoïdale ou rectangulaire, les flancs (18) de la gorge (17), en chaque point de la périphérie du boisseau, étant perpendiculaires ou en contre-dépouille par rapport à la surface d'enveloppe (19) du boisseau rotatif (9).

5. Dispositif selon la revendication 4, caractérisé en ce que les flancs (18) de la gorge et/ou les flancs externes (20) du joint étanche élastique (16) présentent des surélévations ou creux avantageusement linéaires et en particulier des encoches en forme de V.

6. Dispositif selon une ou plusieurs des revendications précédentes, caractérisé en ce que les raccords (4, 5) présentent un même diamètre interne $d_2$ que le diamètre interne $d_1$ du tube d'arrivée (2), la zone de transition des raccords (4, 5) vers le tube d'arrivée (2) présentant une garniture latérale (8) pour diminuer la section transversale des raccords (4, 5) à une largeur de passage "b" plus petite.

Fig. 1

7

Fig. 2